# EUROPEAN PATENT SPECIFICATION

(11) **EP 3 621 180 B1**
(45) Date of publication and mention of the grant of the patent: **10.11.2021**
(21) Application number: 18192364.0
(22) Date of filing: 04.09.2018
(51) Int. Cl.: H02K 1/20, H02K 5/20, F16L 1/00

(54) **COOLING SYSTEM FOR A STATOR FOR AN ELECTRIC MACHINE AND METHOD FOR PRODUCING SUCH A COOLING SYSTEM**
KÜHLSYSTEM FÜR EINEN STATOR FÜR EINE ELEKTRISCHE MASCHINE UND VERFAHREN ZUR HERSTELLUNG SOLCH EINES KÜHLSYSTEMS
SYSTÈME DE REFROIDISSEMENT D'UN STATOR POUR UNE MACHINE ÉLECTRIQUE ET PROCÉDÉ DE FABRICATION D'UN TEL SYSTÈME DE REFROIDISSEMENT

(43) Date of publication of application: 11.03.2020
(73) Proprietor: Robert Bosch GmbH, 70442 Stuttgart (DE)
(72) Inventor: Strel, Damjan, 4223 Polian (SI); Jelenc, Tomaz, 4228 Zelezniki (SI); Ahacic, Gregor, 1000 Ljubljana (SI); Mravlje, Primoz, 1000 Ljubljana (SI)

(56) References cited:
- EP-A1- 2 477 311
- DE-A1- 2 521 759
- DE-A1- 19 757 605
- DE-A1-102007 061 752
- US-A- 4 073 513
- US-A- 5 664 916

## Description

The present invention relates to a cooling system for a stator for an electric machine and a method for producing such a cooling system.

Electric machines, like an electric motor or an electric generator, comprise a rotor which is movable relative to a stator. The rotor is coupled with an element, like an axle or a wheel or a rod, etc., which is to be driven into a linear or rotational motion. During the operation of an electric machine, the electric machine heats up as a side effect of electromagnetic forces which achieve the motion of the rotor. Since the performance of the electric machine deteriorates with increasing temperature of the electric machine, it is common to provide a cooling system for the electric machine.

DE 10 2007 061 752 A1 discloses an electric machine which is cooled by liquid in a cooling system which may have connectors for connecting cooling channels at one face of the stator.

EP 2 477 311 A1 shows a generator, in particular for a wind turbine. The generator comprises an outer rotor and an inner stator. In the center of the stator is mounted a cooling system having cooling channels with two chambers and T connections with one chamber.

It is usually required that the electric machine is efficiently operating with low cost so that the cooling system must be very effective. Further, the electric machine should have compact dimensions and induce low production costs. Thus, a compact, efficiently operating and conveniently mountable electric machine is needed.

Therefore, it is the object of the present invention to provide an efficiently operating cooling system for a stator for an electric machine and a method for producing such a cooling system, which solve the above-mentioned problems and enable in particular to construct and mount the cooling system in a stator of an electric machine in a fast and reliable manner with low costs.

This object is solved by a cooling system for cooling a stator for an electric machine according to claim 1. The cooling system comprises at least two cooling channels for receiving a coolant, and at least one connector for connecting the at least two cooling channels at one face of the stator, as described in claim 1.

The described cooling system enables a very simple and reasonable manner of constructing and operating a cooling system in a stator and, thus, the corresponding electric machine. The cooling system is constructed such that it ensures the best possible contact between a full-laminated stator and the cooling system.

A further remarkable advantage of the cooling system is that the cooling system comprises a reliable and easy producible connection system between cooling channels in the stator, in particular the stator stack. Thus, for assembling the cooling system, no complex technology process is needed so that the cost for producing the cooling system and thus the electric machine is low. Such a cooling system is especially usable for water as the coolant. However, the cooling channels inside of the stator may be used instead for a fan cooled variant of the electric machine.

Besides the mentioned advantages, a further advantage of such a cooling system is that metal inserts may be formed at the connections and/or the ports, like inlets and/or outlets, for the coolant, wherein at least one port may form a threaded port and/or may be overmoulded with polymer material. As a result, no additional parts are needed for assembling the ports for the coolant to the cooling system.

Still a further advantage of the cooling system is that connections made from polymer material are much cheaper (from 40-60%) than connections made from metal material.

In addition, it is advantageous as regards the cooling system that polymer materials are also neutral as regards the development of a galvanic cell in the cooling system. As a result, the polymers may be used in contact with any of the metal materials in the cooling system.

Another advantage of the cooling system lies in that polymer materials have much lower weight than metal materials. This reduces the final weight of the electric machine, as well.

Advantageous further developments of the device are given in the dependent claims.

In one embodiment, the channel dividing element comprises a threaded barrier for building the two chambers. Additionally or alternatively, the channel dividing element comprises a flat barrier for building the two chambers. Additionally or alternatively, the channel dividing element comprises a twisted barrier for building the two chambers. Additionally or alternatively, the channel dividing element is formed as a concentrically cooling channel.

In one specific implementation, the at least two cooling channels for receiving a coolant are made of a first material and are inserted into the stator, and the at least one connector comprises a second material which is different from the first material.

The at least one connector may comprise a port for an inlet or an outlet for the coolant, wherein the port possibly comprises an insert which is made of the first material and which is overmoulded with the second material.

Possibly, the at least one connector comprises a compression limiter configured to be mounted to a mounting element of one of the at least two cooling channels, and wherein the compression limiter is an insert made of the first material.

In one specific implementation, the at least one connector comprises three tubes positioned perpendicular to each other and each one connected with each other.

It is also possible that the at least one connector comprises at one end of one of the three tubes a coupling element for coupling the connector with a tube of another connector.

The above-described cooling system may be part of a stator for an electric machine which further comprises a plurality of sheets forming a laminated stator stack. Herein, the sheets are made of steel or aluminium, wherein the first material is stainless steel or aluminium, and wherein the second material is a polymer.

The above-described stator may be part of an electric machine which further comprises a rotor movable relative to the stator. Herein, the electric machine is a machine for the automotive industry or for the white goods.

The above-described object is further solved by a method according to claim 13 for producing a cooling system for a stator for an electric machine. The method comprises the steps of inserting at least two cooling channels for receiving a coolant into the stator, and connecting, by at least one connector, the at least two cooling channels at one face of the stator, as described in claim 13.

The method achieves the same advantages as they are mentioned above in respect of the device.

Further possible implementations of the invention comprise also combinations of features or styles described above or in the following with reference to the embodiments, even if they are not explicitly mentioned. Herein, the person skilled in the art will also add single aspects as improvements or additions to the respective basic form of the invention. Further implementations of the invention are subject matter of the embodiments of the invention described in the following.

In the following, the invention is described in more detail by means of embodiments and with reference to the appended drawing figures, wherein:
Fig. 1 shows a schematic block diagram of an electric machine according to a first embodiment;
Fig. 2 shows a three-dimensional view of a stator of the electric machine of Fig. 1, to which a cooling system according to the first embodiment is mounted;
Fig 3 shows another three-dimensional view of the stator of Fig. 2, to which the cooling system according to the first embodiment is mounted;
Fig. 4 shows an outer view of the cooling system according to the first embodiment;
Fig. 5 shows a connector of the cooling system according to the first embodiment;
Fig. 6 shows a view of the inner construction of the cooling system according to the first embodiment;
Fig. 7 shows a view of the inner construction of a cooling system according to a second embodiment;
Fig. 8 shows a view of the inner construction of a cooling system according to a third embodiment;
Fig. 9 shows a view of the inner construction of a cooling system according to a fourth embodiment; and
Fig. 10 shows a three-dimensional view of a stator of the electric machine of Fig. 1, to which is mounted a cooling system according to an example which is not claimed.

In the drawing figures, the same or functionally same elements are provided with the same reference signs unless given otherwise.

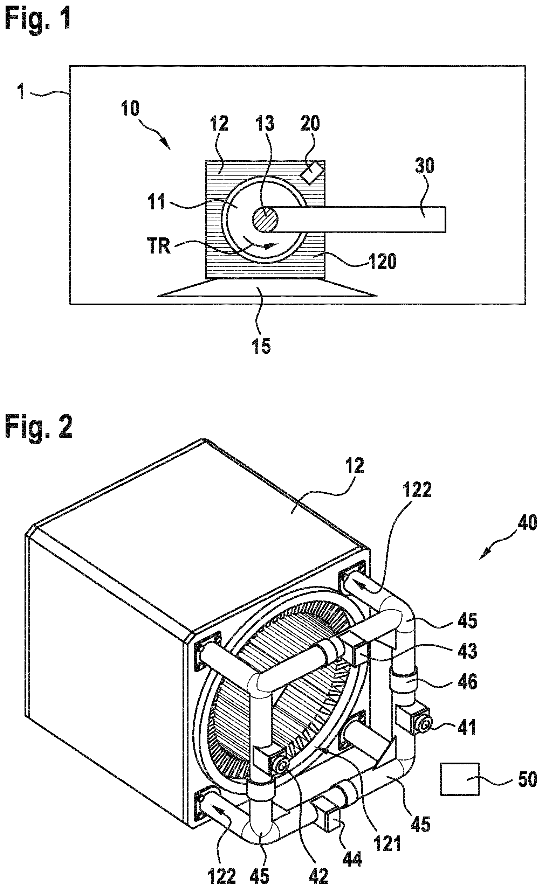

Fig. 1 shows very schematically a plant 1 comprising an electric machine 10. The electric machine 10 has a sensor device 20 and a movable element 30 which is movable by the electric machine 10.

The electric machine 10 is illustrated here as an example as a rotational machine which moves the movable element 30 into a rotation around the axis of the electric machine 10. However, the electric machine 10 may instead be a linear machine which moves the movable element 30 into a linear motion, in particular a translational motion. As another alternative, the electric machine 10 may be a generator for producing electric current. The electric machine 10 may be a direct current machine or an alternating current machine.

The plant 1 may be or comprise a conveying device for transporting an object, like it is used in the automotive industry or the white goods. In particular, the plant 1 is a centrifuge. Alternatively, the plant 1 may be a mixer. Or, the plant 1 is or comprises a moving device for moving a component or workpiece and/or a tool for working on the workpiece. However, the plant 1 may be or comprise any other device for moving an object.

In case appropriate magnetic fields are generated in the electric machine 10 of Fig. 1, a rotor 11 is rotatable relative to a stator 12 around a machine axle or machine shaft 13 in a rotation direction TR. The rotation direction TR of the rotor 11 is shown only as an example and can be reversed instead.

The axis of the machine shaft 13 coincides with the axis of the electric machine 10 in the present example. Herein, the stator 12 is supported and seated by a support device 15. The stator 12 is a stator stack comprising a plurality of laminated sheets 120 made of magnetic material, in particular ferromagnetic material. The laminated sheets 120 may be oriented perpendicular to the machine shaft 13. Thus, the laminated sheets 120 may be oriented perpendicular to the axis of the electric machine 10.

The sensor device 20 is configured to detect at least one characteristic of the electric machine 10, like, for example, the operation temperature, the position of the rotor 11 relative to the stator, the rotational speed of the rotor 11, the machine current, etc.

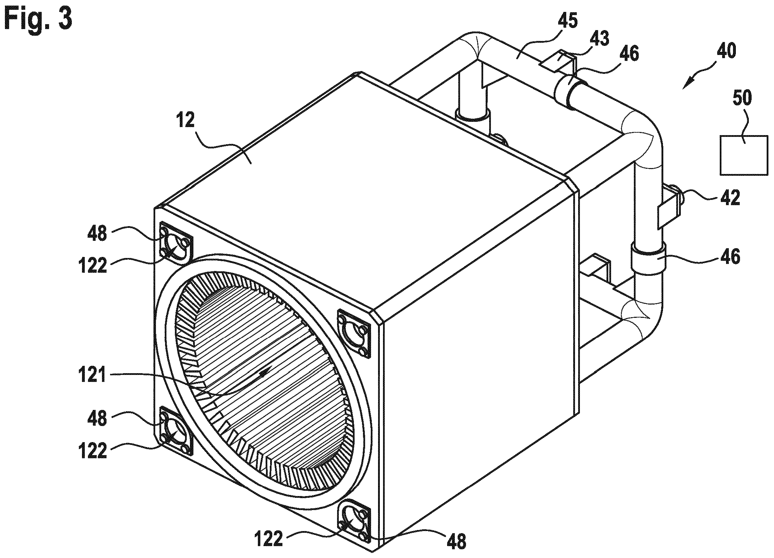

Fig. 2 and Fig. 3 show in more detail the stator 12 to which a cooling system 40 is mounted. The operation of the cooling system 40 may be controlled on the basis of a detecting result of the sensor device 20.

The stator 12 has in the present example an almost cubical form with a cylindrical through opening 121 for the rotor 11 of Fig. 1. In the present example, four further through openings 122 are provided in parallel to the through opening 121 for the rotor 11. The laminated sheets may be oriented perpendicular to the through openings 121, 122.

The cooling system 40 is mounted to one face of the stator 12. The cooling system 40 comprises ports 41 to 44, from which the port 41 may serve as an inlet and the port 42 may serve as an outlet for a coolant 50, for example. The coolant 50 may be a liquid, like water, oil, etc., or a gaseous medium, like any gas, air, etc. In addition, the cooling system 40 comprises connectors 45 which are assembled to each other by coupling elements 46. The coupling elements 46 are formed in the present example as muffle, in particular a connecting sleeve. However, the coupling elements 46 are not limited thereto but may be any other suitable coupling elements 46. Fig. 3 further shows the ends 48 of cooling channels of the cooling system 40.

The ports 43, 44 may be unused or be dummy plugs 43, 44 which are provided as a reserve and may be used, if a further inlet or outlet or a maintenance opening is needed. Therewith, all connectors 45 may be produced basically as identical parts or only two different identical parts.

The through openings 122 of the stator 12 are also suitable for a fan cooled variant of the electric motor 10. For this purpose, air is blown through the through openings 122 by a fan.

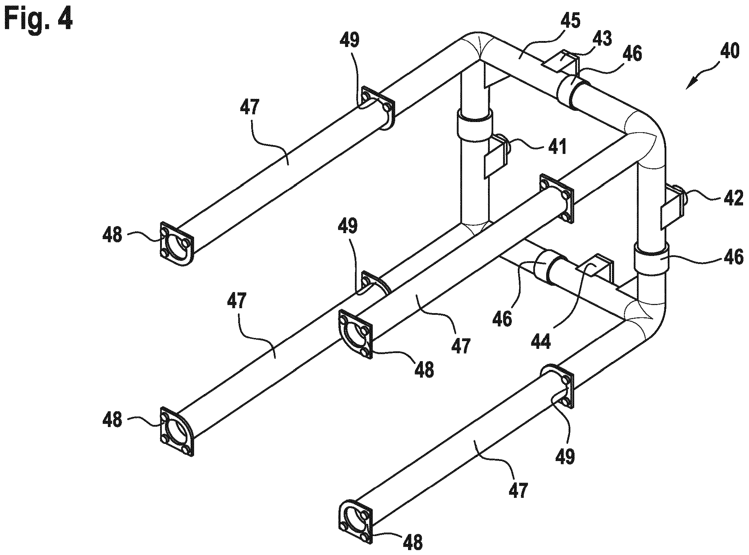

Fig. 4 shows the cooling system 40 in a state, before the cooling system 40 may be mounted to the stator 12 so that the state of Fig. 2 or Fig. 3 is achieved. According to Fig. 4, the cooling system 40 has in addition cooling channels 47 which are formed like a tube. The cooling channels 47 are connected by the connectors 45. In particular, the cooling channels 47 are connected at their one end by a mounting element 49 with one of the connectors 45. The other end of a cooling channel 47 forms one of the ends 48 of the cooling system 40. The ends 48 are formed in the present embodiment as a flange which may cover the outer circumference of the through openings 122 when inserted to the stator 12, as shown in Fig. 3.

The cooling channels 47 may be produced from a first material, for example metal, in particular stainless steel, copper, aluminium, etc.. The cooling channels 47 are inserted into the stator 12. Connections between the cooling channels are constructed with the tubular connectors 45 made from a second material, for example polymer or polymer materials, by an injection moulding process. Thus, for the cooling system 40, a second material different from the first material which is used for the cooling channels 47 is used for connections between the cooling channels 47.

The cooling system 40 may be assembled as shown in Fig. 4. Then, the assembled cooling system 40 may be mounted to the stator 12. Herein, the cooling channels 47 are inserted in the through holes 122 of the stator 12 as it is shown in Fig. 2 and Fig. 3. Alternatively, the cooling channels 47 may be inserted in the through holes 122 of the stator 12 first and then the tubular connectors 45 may be connected to the cooling channels 47 by the mounting elements 49.

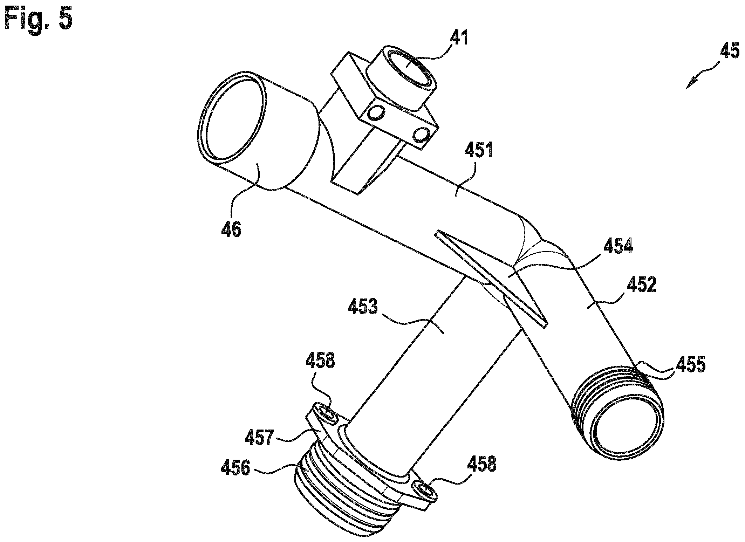

Fig. 5 shows the connectors 45 in more detail. The connectors 45 form a tubular construction having three open tube ends. The connector 45 has thus three tubes 451, 452, 453 connected at one of their ends with each other and positioned perpendicular to each other. The tubes 451, 452 are spaced from each other by a spacing element 454. The spacing element 454 further serves for reinforcing the connectors 45 and to stabilize the position of the tubes 451, 452 relative to each other. At the tube 451 is positioned the port 41 and a coupling element 46. The open end of the tube 452 may be provided with a threaded portion which mates with a corresponding inner configuration of the coupling element 46. Thus, two connectors 45 may be assembled to each other very conveniently. For sealing the connection between the open end of the tube 452 and the coupling element 46, at least one seal 455 may be provided, for example a O-ring, etc.., which is mounted to the outside of the open end of the tube 452 and into a groove of the threaded or grooved portion. The open end of the tube 453 is provided with a threaded portion 456 and a flange 457. The flange 457 has openings for inserting therein fastening means 458, like screws, etc. as parts of the mounting elements 49. Thus, the cooling channels 47 end in the mounting elements 49 with a flange, too. For sealing the connection between the open end of the tube 453 and the cooling channels 47, at least one seal 455 may be provided, for example a O-ring, etc.., which is mounted to the outside of the open end of the tube 453. Also at the grooved or threaded portion 456, the seal 455 may be mounted into a groove of the grooved or threaded portion 456.

The connectors 45 are made with an injection moulding process, for example. The connectors 45 are made from two different materials. The basic material is the above-mentioned second material, like polymer, in particular thermoplastic, thermosets or elastomer, etc., for example. The second parts, the mounting elements 457, are made from the above-mentioned first material, like metal, in particular stainless steel, aluminium, etc., integrated into polymer as metal inserts and/or compression limiters.

These mounting elements 457 or compression limiters are inserted into a tool for the injection moulding process and overmoulded to result in one final product, as shown in Fig. 5. In addition, the port 41 is made from the first material, like stainless steel, aluminium, etc., and is overmoulded with the second material. The main benefit of inserting the port 41 into the tool is that no additional parts for sealing between the insert for the port 41, which is made from the first material, and the connector 45 are needed, which is basically made from the second material.

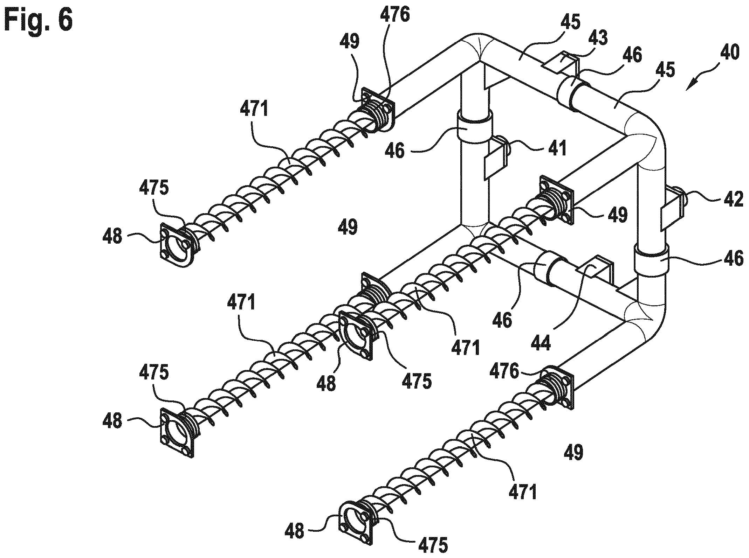

Fig. 6 shows the inner structure of the cooling channels 47. The cooling channels 47 each comprise a channel dividing element 471 for dividing two chambers of the cooling channel 47. The channel dividing element 471 is provided at one or both ends by a sealing 475, 476 which seals the channel dividing element 471 in the cooling channel 47. The sealing 476 can be provided at connectors 45. The channel dividing element 471 is formed as a thread or spiral, which mates at its ends with the inner diameter of the cooling channel 47. As a result, the cooling system 40 has cooling channels divided in two parts. Therewith, the channel dividing element 471 forms two separate chambers in the cooling channel formed by the cooling channel 47 such that the coolant 50 may flow in the cooling channels from the connector 45 in one of the chambers of the cooling channel 47 to the end 48 and then back to the connector 45 in the other chamber of the cooling channel 47. The dividing element 471 may protrude into connector tube 453 to internally separate the two tubes 451 and 452 of the connector 45 at the bend portion. End 48 serves as a blind flange or plug. Therewith, it is possible to fill and empty the cooling system 40 only on one side of the stator 12. Thus, the connectors 45 are to be provided only on one side of the stator 12, as it is shown in Fig. 2 and Fig. 3.

Such a construction of the cooling system 40 has the further advantage that the mounting elements 49 between the cooling channels 47 and the connectors 45 of the cooling channels are required on one side of the stator 12, only. That is, the mounting elements 49 are not required on both sides of the stator 12. Thus, the flow of the coolant 50, like water, air, etc. goes IN and OUT in the same cooling channel. This is a significant advantage over the usual way of cooling a stator 12 of an electric machine 10.

Thus, a cooling system 40 is provided, which has a convenient construction and in which a cooling channel 47 for cooling the stator 12 becomes both supply unit and discharge unit.

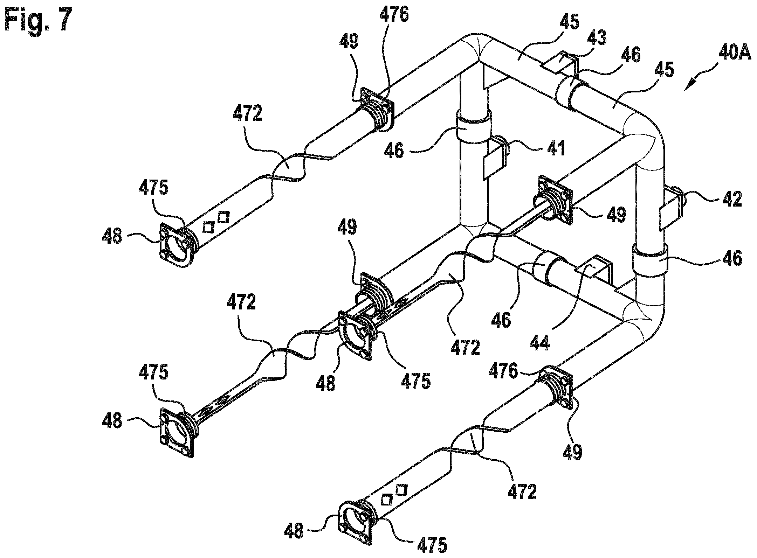

Fig. 7 shows an inner structure of the cooling channels 47 of a cooling system 40A according to a second embodiment. Here, the cooling channels 47 comprise a channel dividing element 472 for dividing two chambers of the cooling channel 47. The channel dividing element 472 is provided at one or both ends by a sealing 475, 476 which seals the channel dividing element 472 in the cooling channel 47. The sealing 476 can be provided at connectors 45. The channel dividing element 472 is formed as a twisted barrier which has a flat construction with a threaded portion, as shown in Fig. 7. The channel dividing element 472 mates at its both ends with the inner diameter of the cooling channel 47. Also therewith, the channel dividing element 472 forms two separate chambers in the cooling channels in the cooling channel 47 such that the coolant 50 may flow in the cooling channels from the connector 45 into one of the chambers of the cooling channel 47 to the end 48 and then back to the connector 45 into the other chamber of the cooling channel 47. The dividing element 472 may protrude into connector tube 453 to internally separate the two tubes 451 and 452 of the connector 45 at the bend portion. End 48 serves as a blind flange or plug. Also with the channel dividing element 472 it is possible to fill and empty the cooling system 40A only on one side of the stator 12. Thus, the connectors 45 are to be provided only on one side of the stator 12, as it is shown in Fig. 2 and Fig. 3.

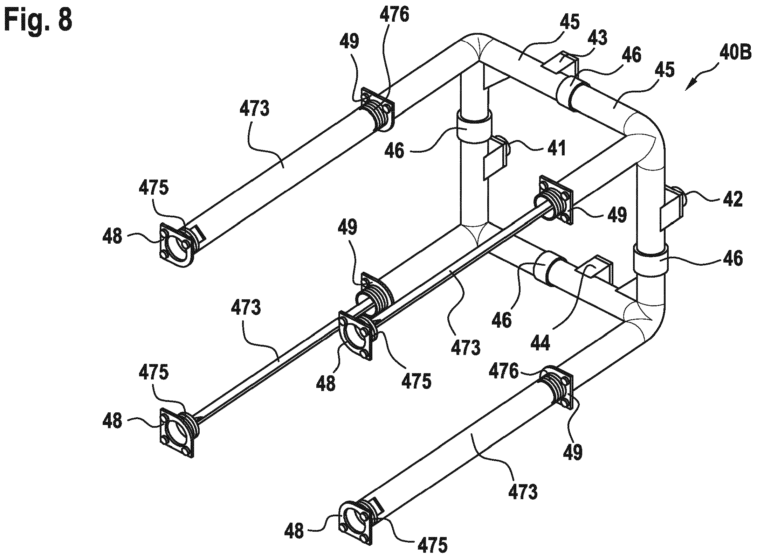

Fig. 8 shows an inner structure of the cooling channels 47 of a cooling system 40B according to a third embodiment. Here, the cooling channels 47 comprise a channel dividing element 473 for dividing two chambers of the cooling channel 47. The channel dividing element 473 is provided at one or both ends by a sealing 475, 476 which seals the channel dividing element 473 in the cooling channel 47. The sealing 476 can be provided at connectors 45. The channel dividing element 473 is formed as a flat barrier, as shown in Fig. 8. The channel dividing element 473 mates at its both ends with the inner diameter of the cooling channel 47.

Also therewith, the channel dividing element 473 forms two separate chambers in the cooling channels in the cooling channel 47 such that the coolant 50 may flow in the cooling channels from the connector 45 into one of the chambers of the cooling channel 47 to the end 48 and then back to the connector 45 into the other chamber of the cooling channel 47. The dividing element 473 may protrude into connector tube 453 to internally separate the two tubes 451 and 452 of the connector at the bend portion. End 48 serves as a blind flange or plug. Also with the channel dividing element 473 it is possible to fill and empty the cooling system 40B only on one side of the stator 12. Thus, the connectors 45 are to be provided only on one side of the stator 12, as it is shown in Fig. 2 and Fig. 3.

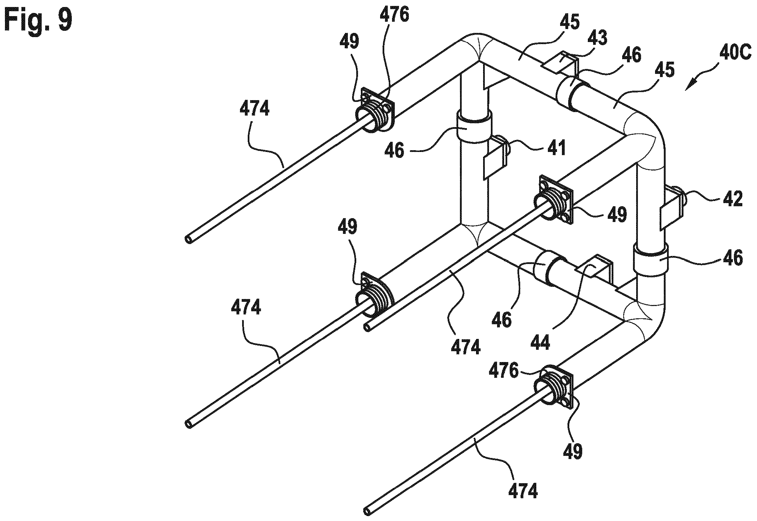

Fig. 9 shows an inner structure of the cooling channels 47 of a cooling system 40C according to a fourth embodiment. Here, the cooling channels 47 comprise a channel dividing element 474 for dividing two chambers of the cooling channel 47. The channel dividing element 474 is provided at one or both ends by a sealing 475, 476 which seals the channel dividing element 471 in the cooling channel 47, even if the sealing 476 is not shown in Fig. 9. The sealing 476 can be provided at connectors 45. The channel dividing element 474 is formed as a concentrically cooling channel, as shown in Fig. 9. Also therewith, the channel dividing element 474 forms two separate chambers in the cooling channels in the cooling channel 47 such that the coolant 50 may flow in the cooling channels from the connector 45 into one of the chambers of the cooling channel 47 to the end 48 and then back to the connector 45 into the other chamber of the cooling channel 47. The dividing element 474 may protrude into connector tube 453 to internally separate the two tubes 451 and 452 of the connector at the bend portion. End 48 serves as a blind flange or plug. Also with the channel dividing element 474 it is possible to fill and empty the cooling system 40C only on one side of the stator 12. Thus, the connectors 45 are to be provided only on one side of the stator 12, as it is shown in Fig. 2 and Fig. 3.

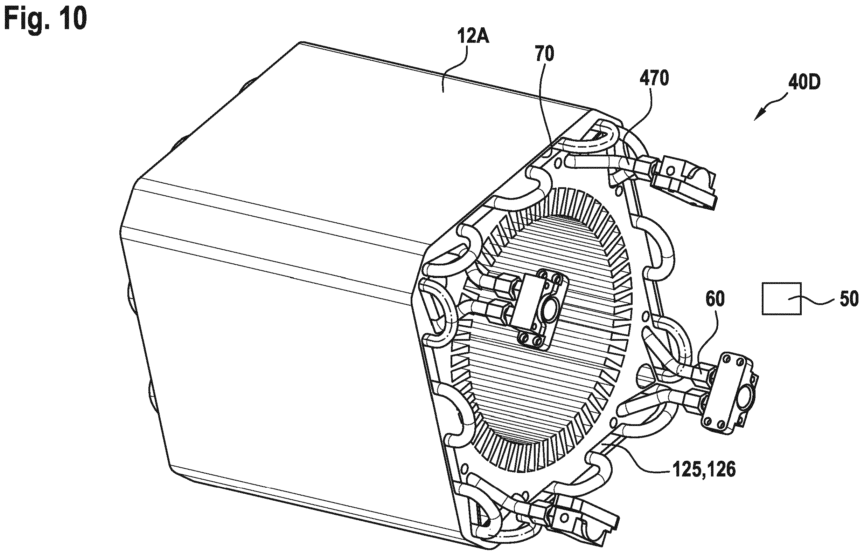

Fig. 10 shows a stator 12A which comprises a cooling system 40D according to a fifth embodiment. The cooling system 40D comprises cooling channels 470 which are connected together around the stator 12A with standardised stud connectors 60. Therewith, also the cooling channels 470 are configured to serve both as supply unit and discharge unit for the coolant 50. As a result, welding or soldering of the cooling channels 470 and connectors 50 for the coolant 50 is not necessary.

The stator 12A further comprises channels 70, into which the cooling channels 470 are inserted. The channels 70 are suitable also for a fan cooled variant of the electric motor 10. For this purpose, air is blown through the channels 70 by a fan.

In a method for producing the cooling system 40D, the cooling system 40D is inserted directly in the whole laminated stator stack of the stator 12A of the electric motor 10. Herein, the complete cooling system 40D is inserted at once to shorten the operation time necessary for the mounting of the cooling system 40D to the whole laminated stack of the stator 12A. Additionally, it is possible to seal the air places between the lamination and cooling channels 470 of the cooling system 40D in stator grooves 125 with thermal conductive sealing compound 126. Such a configuration results in improving the heat dissipation out from the stator 12A due to losses of the material of the stator 12A, like copper losses or iron losses, when the electric motor 10 operates.

All of the above-described implementations of the industrial plant 1, the electric machine 10, the stator 12, the cooling system 40 and the above-described method can be used separately or in all possible combinations thereof. The features of the mentioned embodiments and/or their modifications can be combined arbitrarily. Moreover, in particular, the following modifications are conceivable.

The elements shown in the figures are depicted schematically and can differ in the specific implementations from the forms shown in the figures provided that the above-described functions are ensured.

The number of cooling channels 47, 470 provided in one stator 12, 12A is arbitrarily selectable. Herein, at least one connector 45 between at least two cooling channels 47, 470 may be provided. For this purpose, the form of the connector 45 may be adapted to best suit the requirements for a compact construction of the stator 12, 12A and, thus, the electric machine 10.

Instead of only one channel dividing element 471 to 474, the cooling systems 40, 40 A to 40D may have at least two different channel dividing elements 471 to 474. Herein any combination of channel dividing elements 471 to 474 may be provided. Further, one cooling channel 47, 470 may comprise at least two different channel dividing elements 471 to 474.

## Claims

1. A cooling system (40; 40A to 40D) for cooling a stator (12; 12A) for an electric machine (10), the cooling system (40; 40A to 40D) comprising at least two cooling channels (47; 470) for receiving a coolant (50), and at least one connector (45; 60) configured to be provided at one face of the stator (12; 12A) for connecting the at least two cooling channels (47) at the one face of the stator (12; 12A), wherein the cooling channels (47; 470) are configured to be inserted into the stator (12; 12A) wherein each one of the at least two cooling channels (47; 470) is configured to serve both as supply unit and discharge unit, **characterised in that** each one of the cooling channels (47; 470) comprises at least one channel dividing element (471 to 474) for dividing the cooling channels (47) in two separate chambers, **in that** the at least one connector (45; 60) is divided in the two separate chambers, and **in that** one of the chambers serves as the supply unit and the other chamber serves as the discharge unit.

2. The cooling system (40; 40A to 40D) according to claim 1, wherein the at least one connector (45) comprises a first and a second connector (45), wherein the first connector (45) is connected at one end with the first cooling channel (47) and is connected at another end with an end of the second connector (45), and wherein the second connector (45) is connected at another end with the second cooling channel (47).

3. The cooling system (40; 40A to 40D) according to claim 1 or 2, wherein the channel dividing element (471) comprises a threaded barrier for building the two chambers, and/or wherein the channel dividing element (472; 473) comprises a flat barrier for building the two chambers, and/or wherein the channel dividing element (473) comprises a twisted barrier for building the two chambers, and/or wherein the channel dividing element (474) is formed as a concentrically cooling channel.

4. The cooling system (40; 40A to 40D) according to any one of the preceding claims, wherein the at least two cooling channels (47; 470) for receiving a coolant (50) are made of a first material and are inserted into the stator (12; 12A), and wherein the at least one connector (45) comprises a second material which is different from the first material.

5. The cooling system (40; 40A to 40D) according to any one of the preceding claims, wherein the at least one connector (45) comprises a port (41 to 44) for an inlet or an outlet for the coolant (50), and wherein the port (41 to 44) comprises an insert which is made of the first material and which is overmoulded with the second material.

6. The cooling system (40; 40A to 40D) according to any one of the preceding claims, wherein the at least one connector (45) comprises a compression limiter (457) configured to be mounted to a mounting element (49) of one of the at least two cooling channels (47; 470), and wherein the compression limiter (457) is an insert made of the first material.

7. The cooling system (40; 40A to 40D) according to any one of the preceding claims, wherein the at least one connector (45) comprises three tubes (451 to 453) positioned perpendicular to each other and each one connected with each other.

8. The cooling system (40; 40A to 40D) according to any one of the preceding claims, wherein the at least one connector (45) comprises at one end of one of the three tubes (451 to 453) a coupling element (46) for coupling the connector (45) with a tube (452) of another connector (45).

9. A stator (12; 12A) for an electric machine (10), comprising a plurality of sheets (120) forming a laminated stator stack, and a cooling system according to any one of the preceding claims.

10. The stator (12; 12A) according to claim 9, wherein the sheets (120) are made of steel or aluminium, wherein the first material is stainless steel or aluminium, and wherein the second material is a polymer.

11. An electric machine (10), comprising a stator (12; 12A) according to claims 9 or 10, and a rotor (11) movable relative to the stator (12; 12A).

12. The electric machine (10) according to claim 11, wherein the electric machine (10) is a machine for the automotive industry or for the white goods.

13. A method for producing a cooling system (40; 40A to 40D) for a stator (12; 12A) for an electric machine (10), the method comprising the steps of inserting at least two cooling channels (47; 470) for receiving a coolant (50) into the stator (12; 12A), and connecting, by at least one connector (45) configured to be provided at one face of the stator (12; 12A), the at least two cooling channels (47) at the one face of the stator (12; 12A), wherein each one of the at least two cooling channels (47; 470) is configured to serve both as supply unit and discharge unit, **characterised in that** each one of the cooling channels (47; 470) comprises at least one channel dividing element (471 to 474) which divides the cooling channels (47) in two separate chambers, **in that** the at least one connector (45; 60) is divided in the two separate chambers, and **in that** one of the chambers serves as the supply unit and the other chamber serves as the discharge unit.

## Patentansprüche

1. Kühlsystem (40; 40A bis 40D) zum Kühlen eines Stators (12; 12A) für eine elektrische Maschine (10), wobei das Kühlsystem (40; 40A bis 40D) mindestens zwei Kühlkanäle (47; 470) zur Aufnahme eines Kühlmittels (50) und mindestens einen Verbinder (45; 60), der dazu ausgelegt ist, an einer Seite des Stators (12; 12A) vorgesehen zu sein, um die mindestens zwei Kühlkanäle (47) an der einen Seite des Stators (12; 12A) zu verbinden, umfasst, wobei
die Kühlkanäle (47; 470) dazu ausgelegt sind, in den Stator (12; 12A) eingesetzt zu werden,
wobei jeder der mindestens zwei Kühlkanäle (47; 470) dazu ausgelegt ist, sowohl als Versorgungseinheit als auch als Abgabeeinheit zu dienen, **dadurch gekennzeichnet, dass** jeder der Kühlkanäle (47; 470) mindestens ein Kanalteilungselement (471 bis 474) umfasst, um die Kühlkanäle (47) in zwei getrennte Kammern zu teilen, dadurch, dass der mindestens eine Verbinder (45; 60) in zwei getrennte Kammern geteilt ist, und dadurch, dass eine der Kammern als Versorgungseinheit dient und die andere Kammer als Abgabeeinheit dient.

2. Kühlsystem (40; 40A bis 40D) nach Anspruch 1, wobei der mindestens eine Verbinder (45) einen ersten und einen zweiten Verbinder (45) umfasst, wobei der erste Verbinder (45) an einem Ende mit dem ersten Kühlkanal (47) verbunden ist und an einem anderen Ende mit einem Ende des zweiten Verbinders (45) verbunden ist, und wobei der zweite Verbinder (45) an einem anderen Ende mit dem zweiten Kühlkanal (47) verbunden ist.

3. Kühlsystem (40; 40A bis 40D) nach Anspruch 1 oder 2, wobei das Kanalteilungselement (471) eine Gewindesperre zum Ausbilden der zwei Kammern umfasst und/oder wobei das Kanalteilungselement (472; 473) eine flache Sperre zum Ausbilden der zwei Kammern umfasst und/oder wobei das Kanalteilungselement (473) eine verdrehte Sperre zum Ausbilden der zwei Kammern umfasst und/oder wobei das Kanalteilungselement (474) als konzentrischer Kühlkanal ausgebildet ist.

4. Kühlsystem (40; 40A bis 40D) nach einem der vorstehenden Ansprüche, wobei die mindestens zwei Kühlkanäle (47; 470) zum Aufnehmen eines Kühlmittels (50) aus einem ersten Material bestehen und in den Stator (12; 12A) eingesetzt werden und wobei der mindestens eine Verbinder (45) ein zweites Material umfasst, das sich vom ersten Material unterscheidet.

5. Kühlsystem (40; 40A bis 40D) nach einem der vorstehenden Ansprüche, wobei der mindestens eine Verbinder (45) einen Stutzen (41 bis 44) für einen Einlass oder einen Auslass für das Kühlmittel (50) umfasst und wobei der Stutzen (41 bis 44) einen Einsatz umfasst, der aus dem ersten Material besteht und mit dem zweiten Material überformt ist.

6. Kühlsystem (40; 40A bis 40D) nach einem der vorstehenden Ansprüche, wobei der mindestens eine Verbinder (45) einen Kompressionsbegrenzer (457) umfasst, der dazu ausgelegt ist, an einem Montageelement (49) eines der mindestens zwei Kühlkanäle (47; 470) montiert zu sein, und wobei der Kompressionsbegrenzer (457) ein Einsatz ist, der aus dem ersten Material besteht.

7. Kühlsystem (40; 40A bis 40D) nach einem der vorstehenden Ansprüche, wobei der mindestens eine Verbinder (45) drei Rohre (451 bis 453) umfasst, die senkrecht zueinander und jeweils miteinander verbunden angeordnet sind.

8. Kühlsystem (40; 40A bis 40D) nach einem der vorstehenden Ansprüche, wobei der mindestens eine Verbinder (45) an einem Ende eines der drei Rohre (451 bis 453) ein Kopplungselement (46) zum Koppeln des Verbinders (45) mit einem Rohr (452) eines anderen Verbinders (45) umfasst.

9. Stator (12; 12A) für eine elektrische Maschine (10), mehrere Bleche (120), die einen laminierten Statorstapel ausbilden, und ein Kühlsystem nach einem der vorstehenden Ansprüche umfassend.

10. Stator (12; 12A) nach Anspruch 9, wobei die Bleche (120) aus Stahl oder Aluminium bestehen, wobei das erste Material Edelstahl oder Aluminium ist und wobei das zweite Material ein Polymer ist.

11. Elektrische Maschine (10), einen Stator (12; 12A) nach Anspruch 9 oder 10 und einen in Bezug zum Stator (12; 12A) beweglichen Rotor (11) umfassend.

12. Elektrische Maschine (10) nach Anspruch 11, wobei die elektrische Maschine (10) eine Maschine für die Automobilindustrie oder für Weißware ist.

13. Verfahren zur Herstellung eines Kühlsystems (40; 40A bis 40D) für einen Stator (12; 12A) für eine elektrische Maschine (10), wobei das Verfahren die Schritte des Einsetzens mindestens zweier Kühlkanäle (47; 470) zur Aufnahme eines Kühlmittels (50) in den Stator (12; 12A) und das Verbinden über mindestens einen Verbinder (45), der dazu ausgelegt ist, an einer Seite des Stators (12; 12A) vorgesehen zu sein, der mindestens zwei Kühlkanäle (47) an einer Seite des Stators (12; 12A) umfassend, wobei jeder der mindestens zwei Kühlkanäle (47; 470) dazu ausgelegt ist, sowohl als Versorgungseinheit als auch als Abgabeeinheit zu dienen, **dadurch gekennzeichnet, dass** jeder der Kühlkanäle (47; 470) mindestens ein Kanalteilungselement (471 bis 474) umfasst, das die Kühlkanäle (47) in zwei getrennte Kammern teilt, dadurch, dass der mindestens eine Verbinder (45; 60) in zwei getrennte Kammern geteilt ist, und dadurch, dass eine der Kammern als Versorgungseinheit dient und die andere Kammer als Abgabeeinheit dient.

## Revendications

1. Système (40 ; 40A à 40D) de refroidissement destiné à refroidir un stator (12 ; 12A) pour une machine électrique (10), le système (40 ; 40A à 40D) de refroidissement comportant au moins deux conduits (47 ; 470) de refroidissement destinés à recevoir un agent (50) de refroidissement, et au moins un raccord (45 ; 60) configuré pour être placé au niveau d'une face du stator (12 ; 12A) pour raccorder lesdits au moins deux conduits (47) de refroidissement au niveau de la face en question du stator (12 ; 12A), les conduits (47 ; 470) de refroidissement étant configurés pour être insérés dans le stator (12 ; 12A), chacun desdits au moins deux conduits (47 ; 470) de refroidissement étant configuré pour servir à la fois d'unité d'alimentation et d'unité d'évacuation, **caractérisé en ce que** chacun des conduits (47 ; 470) de refroidissement comporte au moins un élément (471 à 474) de division de conduits servant à diviser les conduits (47) de refroidissement en deux chambres séparées, **en ce que** le ou les raccords (45 ; 60) sont divisés en les deux chambres séparées, et **en ce qu'**une des chambres sert d'unité d'alimentation et l'autre chambre sert d'unité d'évacuation.

2. Système (40 ; 40A à 40D) de refroidissement selon la revendication 1, le ou les raccords (45) comportant un premier et un second raccord (45), le premier raccord (45) étant relié à une extrémité au premier conduit (47) de refroidissement et étant relié à l'autre extrémité à une extrémité du second raccord (45), et le second raccord (45) étant relié à l'autre extrémité au second conduit (47) de refroidissement.

3. Système (40 ; 40A à 40D) de refroidissement selon la revendication 1 ou 2, l'élément (471) de division de conduit comportant une barrière filetée servant à construire les deux chambres, et/ou l'élément de division de conduit (472 ; 473) comportant une barrière plate servant à construire les deux chambres, et/ou l'élément (473) de division de conduit comportant une barrière torsadée servant à construire les deux chambres, et/ou l'élément (474) de division de conduit étant formé comme un conduit concentrique de refroidissement.

4. Système (40 ; 40A à 40D) de refroidissement selon l'une quelconque des revendications précédentes, lesdits au moins deux conduits (47 ; 470) de refroidissement destinés à recevoir un agent (50) de refroidissement étant constitués d'un premier matériau et étant insérés dans le stator (12 ; 12A), et le ou les raccords (45) comportant un second matériau qui est différent du premier matériau.

5. Système (40 ; 40A à 40D) de refroidissement selon l'une quelconque des revendications précédentes, le ou les raccords (45) comportant un orifice (41 à 44) destiné à une entrée ou à une sortie pour l'agent (50) de refroidissement, et l'orifice (41 à 44) comportant un insert qui est constitué du premier matériau et qui est surmoulé avec le second matériau.

6. Système (40 ; 40A à 40D) de refroidissement selon l'une quelconque des revendications précédentes, le ou les raccords (45) comportant un limiteur (457) de compression configuré pour être monté sur un élément (49) de montage d'un desdits au moins deux conduits (47 ; 470) de refroidissement, et le limiteur (457) de compression étant un insert constitué du premier matériau.

7. Système (40 ; 40A à 40D) de refroidissement selon l'une quelconque des revendications précédentes, le ou les raccords (45) comportant trois tubes (451 à 453) positionnés perpendiculairement l'un à l'autre et raccordés l'un à l'autre.

8. Système (40 ; 40A à 40D) de refroidissement selon l'une quelconque des revendications précédentes, le ou les raccords (45) comportant, à une extrémité d'un des trois tubes (451 à 453), un élément (46) de couplage servant à coupler le raccord (45) à un tube (452) d'un autre raccord (45).

9. Stator (12 ; 12A) pour une machine électrique (10), comportant une pluralité de feuilles (120) formant un empilement de stator feuilleté, et un système de refroidissement selon l'une quelconque des revendications précédentes.

10. Stator (12 ; 12A) selon la revendication 9, les feuilles (120) étant constitués d'acier ou d'aluminium, le premier matériau étant de l'acier inoxydable ou de l'aluminium, et le second matériau étant un polymère.

11. Machine électrique (10), comportant un stator (12 ; 12A) selon les revendications 9 ou 10, et un rotor (11) mobile par rapport au stator (12 ; 12A).

12. Machine électrique (10) selon la revendication 11, la machine électrique (10) étant une machine destinée à l'industrie automobile ou aux produits blancs.

13. Procédé de production d'un système (40 ; 40A à 40D) de refroidissement pour un stator (12 ; 12A) destiné à une machine électrique (10), le procédé comportant les étapes consistant à insérer au moins deux conduits (47 ; 470) de refroidissement destinés à recevoir un agent (50) de refroidissement dans le stator (12 ; 12A), et à raccorder, par au moins un raccord (45) configuré pour être placé au niveau d'une face du stator (12 ; 12A), lesdits au moins deux conduits (47) de refroidissement au niveau de la face en question du stator (12 ; 12A), chacun desdits au moins deux conduits (47 ; 470) de refroidissement étant configuré pour servir à la fois d'unité d'alimentation et d'unité d'évacuation, **caractérisé en ce que** chacun des conduits (47 ; 470) de refroidissement comporte au moins un élément (471 à 474) de division de conduits qui divise les conduits (47) de refroidissement en deux chambres séparées, **en ce que** le ou les raccords (45 ; 60) sont divisés en les deux chambres séparées, et **en ce qu'**une des chambres sert d'unité d'alimentation et l'autre chambre sert d'unité d'évacuation.
